# EUROPEAN PATENT APPLICATION

(11) **EP 1 574 959 A1**
(43) Date of publication of application: **14.09.2005**
(21) Application number: 03777390.0
(22) Date of filing: 09.12.2003
(51) Int. Cl.: G06F 12/00, H04N 5/91

(54) **DATA MANAGEMENT STRUCTURE REWRITING PROGRAM**

(30) Priority: 16.12.2002 JP 2002363564; 05.11.2003 JP 2003375611
(71) Applicant: KONICA MINOLTA HOLDINGS, INC., Tokyo 100-0005 (JP)
(72) Inventor: IGARASHI, Takashi c/o Konica Minolta Photo, Hino-shi, Tokyo 191-8511 (JP); HUNG, Po-Chieh c/o Konica Minolta Technology, Hachioji-shi, Tokyo 192-8505 (JP); UEDA, Yutaka c/o Konica Minolta Photo, Hachioji-shi, Tokyo 192-8505 (JP)
(74) Representative: Henkel, Feiler & Hänzel
(86) International application number: PCT/JP2003/015720
(87) International publication number: WO 2004/055677

(57) **Abstract**

A data control structure rewriting program to control a computer to function as a data control structure rewriting device for storing a plurality of data sets in a hierarchical structure in a recording section, where each data set includes a folder and image data, the device comprises a reading section; a data control structure analyzing section to analyze the data control structure of additional data set read by the reading section and to compare the analyzed data control structure of the additional data set with the data control structure of a data set stored in a hierarchical position; and a data control structure generating section to rewrite the hierarchical structure, wherein when the comparison result of the data control structure analyzing section satisfies a predetermined condition, the data control structure generating section adds the additional data set in the recording section by linking the additional data at the hierarchical position in the hierarchical structure.

## Description

### BACKGROUND OF INVENTION

The present invention relates to a data control structure rewriting program, and in particular, to a data control structure rewriting program for writing in data relating to images by means of a structure which can easily be utilized for other memory means.

With the spread of photographing equipment such as a digital camera and a camera-fitted cellphone, the number of users who utilize photographic images as digital data is increasing. In the case of a digital camera and a camera-fitted cellphone, it is possible to record photographic images in a memory means housed in equipment or in various detachable media, and thereby to observe them by the use of a display means of the equipment. However, it is necessary for users who photograph frequently to store image data in separate memory means, because a data size for photographic images is great, and a storage capacity of a memory means housed in equipment and of a medium is not so great.

For example, Japanese Patent Publication Open to Public Inspection No. 2002-185896 discloses a method of data processing service that can back up simply image data of photographs taken by a digital camera and its system. A capacity of a recording medium attached to or housed in a small-sized and light-weight digital camera is about 8 - 16 MByte, while a sheet of image requires an amount of data close to 1 MByte under the high image quality mode, which causes a problem that the number of image sheets which can be taken for this recording medium is about 10 sheets at the best, and that the number of spare recording media is not so many because the recording medium is expensive. For this problem, the patent gazette stated above discloses a method to conduct a step to read taken image data stored in a memory in a digital camera of a user and a step for the user to store the taken image data thus read in a recording medium that is accessible for the user, in the service to conduct back up of image data by the use of a service terminal installed in a store.

In the case of a user who is familiar with operations of a personal computer, the user conducts read in of image data by inserting various media to be mounted on a digital camera into a slot of the personal computer, or conducts transmission of image data of photographs taken to the personal computer, to accumulate image data in the personal computer and thereby to display or observe image data by the use of an image display application installed in the personal computer in advance.

Japanese Patent Publication Open to Public Inspection No. 2002-185896 (page 3 - page 7, Fig. 1)

In the case of recording image data recorded in a photographing equipment such as a digital camera or a camera-fitted cellphone or in media for a digital camera on an information recording medium such as a hard disc of a personal computer or CD-R, when writing image data of a single photographing equipment or one medium on one memory means, image data or a folder containing the image data has only to be written on the memory means as it is, however, when much image data recorded on plural photographing equipment or on plural media are recorded on a single memory means collectively, if image data or folders are not recorded with a data recording structure (file tree structure) composed of a folder having an appropriate name, the location of the image data and the name of the photographic equipment for the image data or the name of a medium for the image data become unclear, which is extremely inconvenient.

In particular, in the case of a digital camera, when arranging image data of plural digital cameras in one memory means, if image data or folders are copied as they are, they are recorded under the condition of no uniformity, and further, it is sometimes impossible to copy when file names and folder names are overlapped, because data control structure and folder names are not unified by makers that manufacture cameras.

Therefore, when writing image data recorded on many photographing equipment and media on a single memory means, there are needed operations that a user itself makes a folder, by thinking about data control structure of the memory means, and then, gives to each folder an appropriate name that can easily be controlled, and writes image data on the folder. However, these operations are difficult for a user who is not skillful for personal computer operations, and they are complicated work even for a user who is skillful for personal computer operations.

In recent years, there is available a service wherein negative films for photographs taken by a film-based camera are read by a scanner and are recorded on an information recording medium such as CD-R to be offered to a user. By using this service, it is possible to utilize a large number of photographs taken formerly as digital data. However, in this service, information recording media are made in a unit of negative films provided in the case of ordering, and therefore, when controlling by collecting image data recorded on plural information recording media with a single memory means, the aforementioned operations need to be repeated.

When putting image data recorded in various photographing equipment, media and information recording media separately in a single memory means together, it is necessary for a user to conduct complicated operations to create an appropriate data control structure, and therefore, these image data are stored on a decentralized basis after all without being used, in many cases, resulting in a problem that image data cannot be used effectively and utilization of photo-service cannot be promoted.

### SUMMARY OF THE INVENTION

The invention has been achieved in view of the problems stated above, and its primary object is to provide a data control structure rewriting program that can record on other memory means image data recorded on a photographing equipment such as a digital camera, media for the digital camera and information recording medium such as CD-R by means of a data control structure that can be used easily.

For attaining the aforementioned object, the data control structure rewriting program of the invention is one that makes a computer to function as a data control structure generating means wherein the first folder having a prescribed name of the aforesaid additional data is positioned in the layer that is lower than the second folder controlling the existing data by a prescribed number of steps and data of the data control structure in which a data control structure controlling the existing data is updated so that the data control structure of the additional data may be maintained are generated, when existing data controlled by a data control structure having therein the first folder having a prescribed name and the second folder that is positioned in a layer that is lower than the first folder by a prescribed number of steps, and has a prescribed name are present in the data memory means, and when additional data controlled newly by the data control structure that is identical to the data control structure are stored in the data memory means, with the first folder controlled in the layer positioned to be in the same layer for the first folder or to be lower than the first folder.

In the data control structure rewriting program of the invention, when data in a photographing equipment such as a digital camera, media for the digital camera and in information recording media such as CD-R are written on other memory means by a user, it is not necessary for the user to consider the data control structure of the memory means each time, which makes it possible to write in data easily and to control a large number of data collectively with the data control structure which can be used easily by an application and a photo-service.

### BRIEF DESCRIPTION OF THE DRAWINGS

Fig. 1 is a diagram showing schematically the structure of a computer device including a data control structure rewriting program relating to Example 1 of the invention.
Fig. 2 is a block diagram showing the structure of a data recording section of a computer device relating to Example 1 of the invention.
Fig. 3 is a diagram of a flow chart showing data recording procedures employing the data control structure rewriting program relating to Example 1 of the invention.
Fig. 4 is a diagram showing a structure example of a folder made by the data control structure rewriting program relating to Example 1 of the invention.
Fig. 5 is a diagram showing a structure example of a folder made by the data control structure rewriting program relating to Example 1 of the invention.
Fig. 6 is a diagram showing a structure example of a folder made by the data control structure rewriting program relating to Example 1 of the invention.
Fig. 7 is a diagram showing a structure example of a folder made by the data control structure rewriting program relating to Example 1 of the invention.
Fig. 8 is a diagram showing a structure example of a folder made by the data control structure rewriting program relating to Example 1 of the invention.
Fig. 9 is a diagram showing a structure example of a folder made by the data control structure rewriting program relating to Example 2 of the invention.
Fig. 10 is a diagram showing a structure example of a folder made by the data control structure rewriting program relating to Example 2 of the invention.
Fig. 11 is a diagram showing a structure example of a folder made by the data control structure rewriting program relating to Example 3 of the invention.
Fig. 12 is a diagram showing a structure example of a folder made by the data control structure rewriting program relating to Example 3 of the invention.
Fig. 13 is a diagram showing a structure example of a folder made by the data control structure rewriting program relating to Example 3 of the invention.
Fig. 14 is a diagram showing a structure example of a folder made by the data control structure rewriting program relating to Example 1 of the invention.
Fig. 15 is a diagram showing schematically an external structure of a computer device including the data control structure rewriting program of the invention.
Fig. 16 is a diagram showing schematically an external structure of a computer device including the data control structure rewriting program of the invention.
Fig. 17 is a diagram showing schematically an external structure of a computer device including the data control structure rewriting program of the invention.

### DETAILED DESCRIPTION OF THE PREFERRED EMBODIMENT

The data control structure rewriting program of the invention is one that makes a computer to function as a means to generate data of a new data control structure to which additional data are added, while the data control structure is maintained at a layer that is lower than the second folder of the memory means, when data controlled by the data control structure having therein the first folder with a prescribed name and the second folder with a prescribed name positioned in the layer that is lower than the first folder are present in the memory means wherein data are to be recorded, and when additional data to be controlled by the same data control structure are present in photographing equipment such as a digital camera and a camera-fitted cellphone, media for digital cameras and information recording media such as CD-R and others, in its preferable embodiment, thus, it is not necessary for a user to write data while being conscious of the data control structure, by adding data successively with a data control structure serving as a unit, and thereby, even a user who is inexperienced in operations of a personal computer can write data simply.

### (Example)

An example of the invention will be explained as follows, referring to the drawings, to explain the embodiment of the invention in a more detailed way.

### (Example 1)

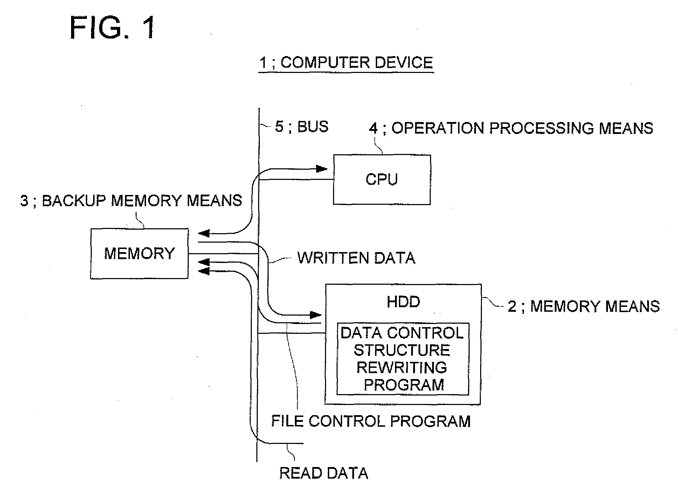

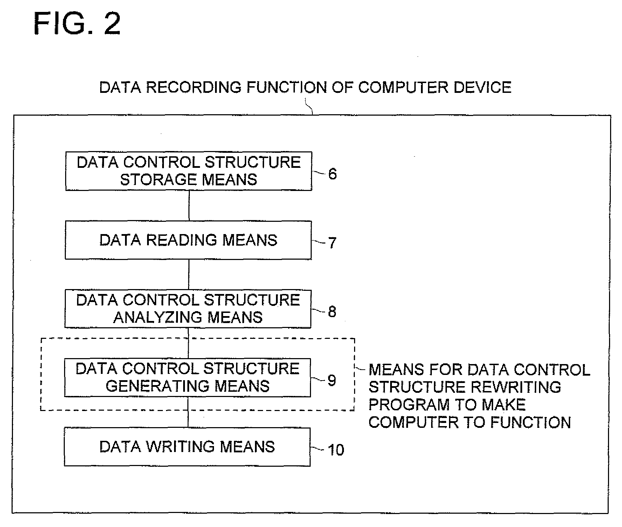

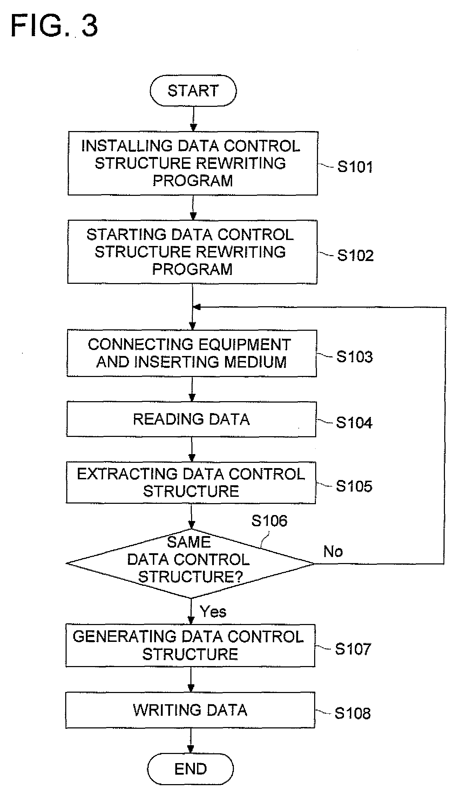

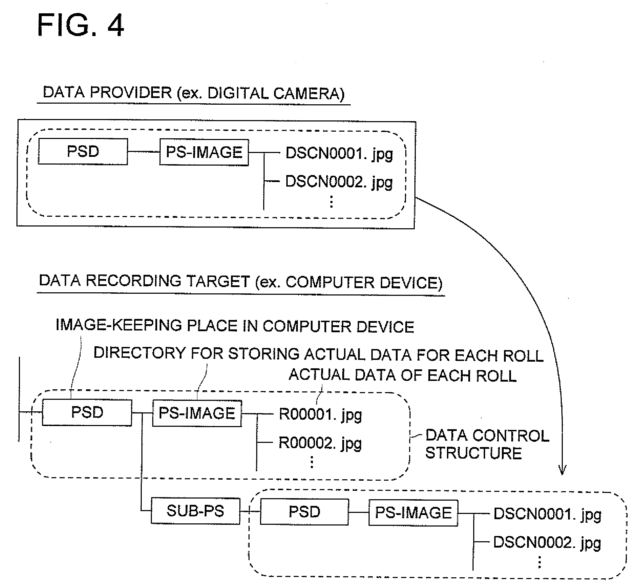

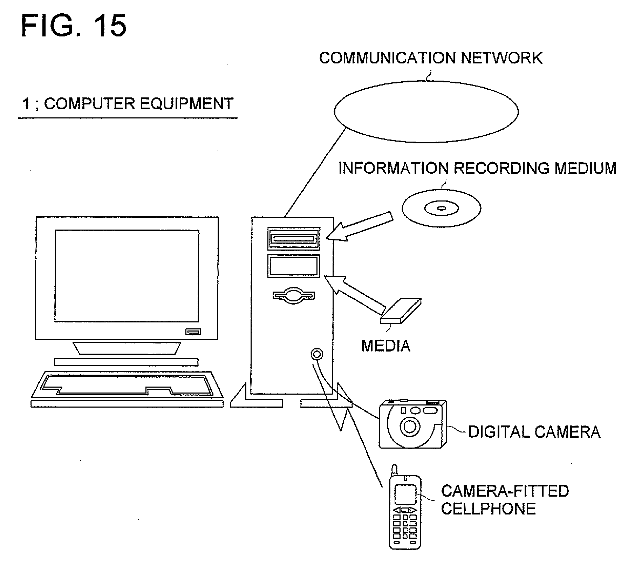

First, the data control structure program relating to the first example of the invention will be explained as follows, referring to Figs. 1 - 8 and Figs. 14 - 17. Fig. 1 is a diagram showing schematically the structure of the computer device wherein the data control structure rewriting program relating to the present example is installed, and Fig. 2 is a block diagram showing a function of a computer device. Fig. 3 is a flow chart showing procedures for recording data employing the data control structure rewriting program, and each of Figs. 4 - 8 and Fig. 14 is a diagram showing an example of folder structure made by the data control structure rewriting program. Each of Figs. 15 - 17 is a diagram showing an external structure of the apparatus in which the data control structure rewriting program of the present example is installed.

As shown in Fig. 1, computer device 1 of the present example is one wherein memory means 2 such as a hard disc drive (hereinafter referred to as HDD in abbreviation) that records data controlled by a data control structure rewriting program or by a prescribed data control structure, temporary memory means 3 such as a memory that houses a data control structure rewriting program and data temporarily and operation means 4 such as CPU for executing the program are connected through bus 5, as a basic structure of the computer device 1.

Data recording functions of the computer device 1 shown in terms of means are those illustrated in Fig. 2. Namely, there are provided data control structure memory means 6 that stores therein a data control structure owned by data of memory means 2, data reading means 7 that reads data through photographing equipment (hereinafter, an equipment equipped with a photographing function is called a photographing equipment) such as a digital camera and a camera-fitted cellphone, various media (hereinafter, information recording media used for digital cameras are called media to distinguish from information recording media such as CD-R) such as Smart Media, Compact Flash (a registered trademark), Memory Stick (a registered trademark), SD memory card and a multi-media card, a disc type information recording medium 14 such as CD-R/RW, DVD±R/RW, DVD-RAM and Blue-ray disc (hereinafter, these are generically called CD-R) on which image data taken by reading of a negative film through scanning are recorded, and communication network 15 such as Internet, data control structure analyzing means 8 that analyzes a data control structure of the data obtained through reading and compares with a data control structure of memory means 2, data control structure generating means 9 that generates data of a new data control structure to which data equipped with the same data control structure is equipped at the prescribed layer position on data of memory means 2 is added, and data writing means 10 that writes data obtained from photographing equipment, media or information recording media on memory means 2 based on the generated data control structure. Further, the data control structure rewriting program is one for making at least a computer to function as the aforementioned data control structure generating means 10.

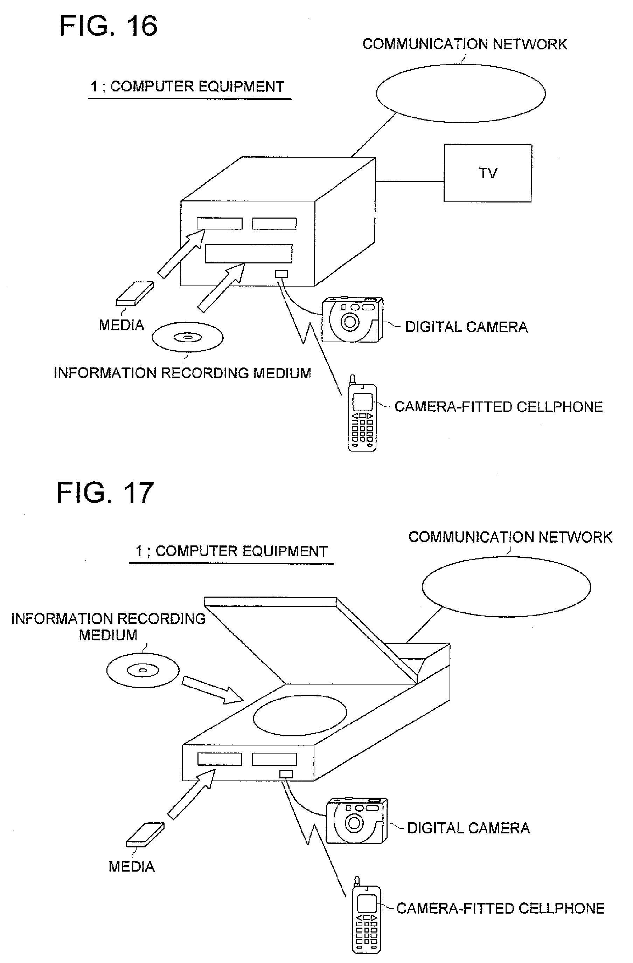

Incidentally, the structure in Fig. 1 is an illustration which has only to be the structure capable of executing the data control structure rewriting program, and as computer device 1, a personal computer shown in Fig. 15, an exclusive set top box shown in Fig. 16, a portable writer shown in Fig. 17, DVD player provided with an operation means and a storage means or DVD recorder, for example, may also be employed. Further, data recorded by the data control structure rewriting program do not always need to be recorded on memory means 2, and it may also be the structure wherein data are stored in another memory means of computer device 1 or in memory means such as a home server or Web server to be connected to the computer device 1.

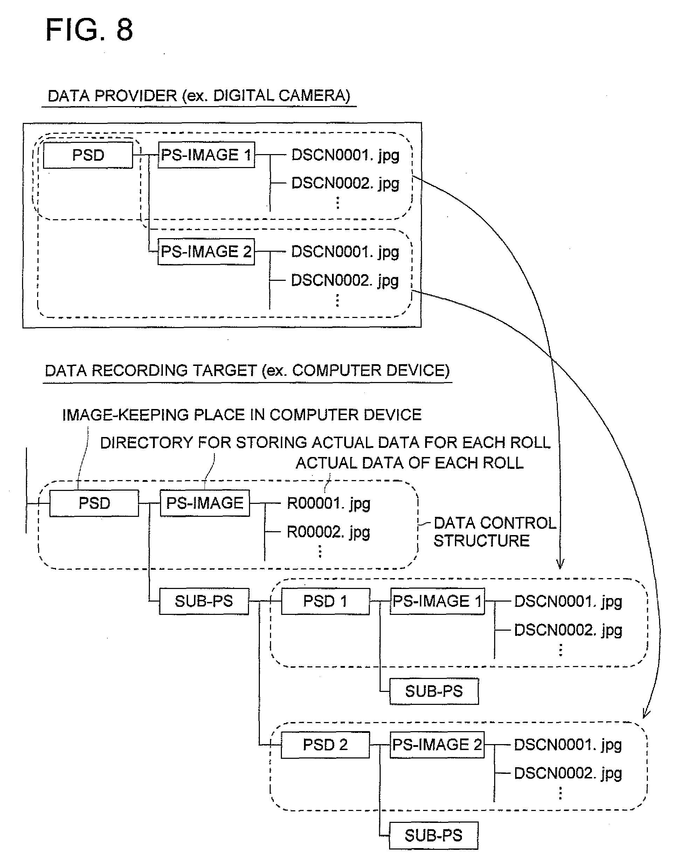

Procedures to record on the prescribed memory means (HDD2 in this case) the folders and data (hereinafter, a set of the folder and data of a prescribed data control structure is called set data to distinguish from each data) with prescribed data control structure which have been read from photographing equipment such as a digital camera, media and information recording medium by using computer device 1 wherein the data control structure rewriting program having the aforesaid structure, will be explained as follows, referring to a flow chart in Fig. 3 and to folder examples in Figs. 4 and 8. Incidentally, for making the explanation to be easy, an explanation will be given as follows on the assumption that a personal computer wherein Microsoft (R), Windows (R) or "95/98/98SE/2000 Professional/XP Home Edition/XP Professional etc." is installed as a basic OS for making the computer to operate is used.

First, a user installs the data control structure rewriting program of the present example in computer device 1, in step S 101. Incidentally, it is also possible to make the program to operate by using an information recording medium such as CD-R on which a data control structure rewriting program is recorded, without installing the data control structure rewriting program on memory means 2, or to make the program to operate with another computer device to be connected to the computer device 1, or with a home server or Web server.

Next, when the data control structure rewriting program is started in step S 102, the data control structure rewriting program stored in memory means 2 is loaded in temporary memory means 3 to be executed.

Next, in step S 103, a user prepares for the transmission of the data by connecting a photographing equipment such as a digital camera or a camera-fitted cellphone to the connection terminal of computer device 1, by inserting into a media slot various media each having thereon data recorded or by inserting CD-R having thereon a recorded data into the CD-R drive. Then, in step S 104, data reading means 7 reads recorded data from the photographing equipment, media or from CD-R, and stores them in temporary memory means 3.

Next, in step S 105, CPU 4 analyzes data obtained through reading, by the used of data control structure analyzing means 8, and in step S 106, CPU 4 judges whether there are set data controlled by the same data control structure as that owned by memory means 2 stored in data control structure storage means 6 or not. For example, in the data recorder (memory means 2 of computer 1 in this case), folder "PS-IMAGE" showing an actual data storage directory for prescribed each group (for example, each roll) is present in the layer that is lower than folder "PSD" showing the image storage place in computer device 1 as shown on the lower portion in Fig. 4, and inside the folder, there are stored image data "R00001. jpg" representing an actual data of each roll, this "PSD" - "PS_IMAGE" - image data is made to be a basic data control structure. On the other hand, in the data provider (digital camera in this case), as shown on the upper portion in Fig. 4, folder "PS_IMAGE" showing an actual data storage directory for each roll is provided to be lower than folder "PSD" showing the image storage place in the digital camera, and inside the folder, there are stored image data "DSCN0001. jpg" representing an actual data of each roll, and "PSD" - "PS_IMAGE" - image data is made to be a data control structure in the same way. Therefore, the data control structure analyzing means 8 judges that both of them have the same data control structure.

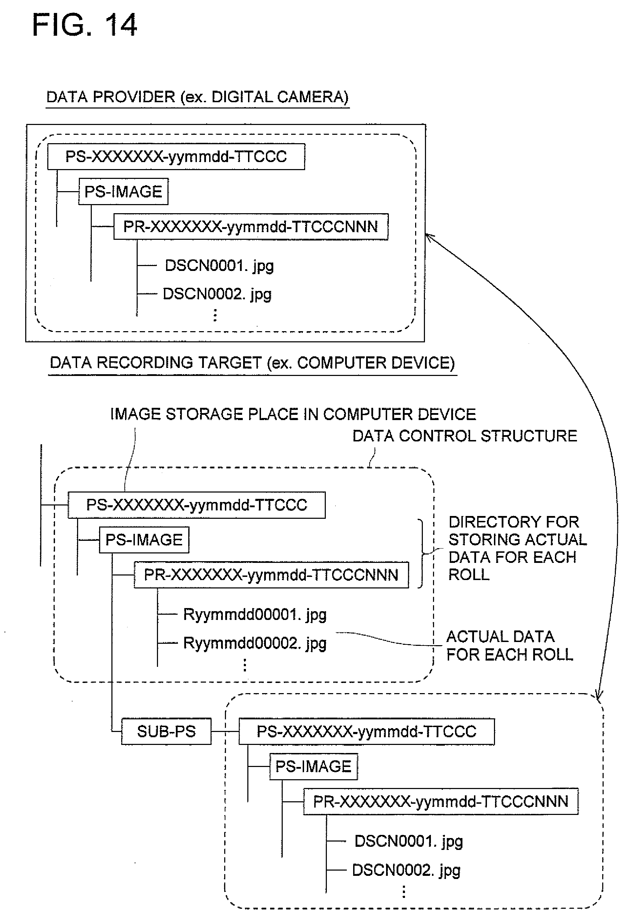

The name of the folder stated above is an example, and an optional name can be used, and each of the name and the amount of image data stored in the "PS_IMAGE" folder may be different. For example, as a name of the folder, a name ("PS_XXXXXXX_yymmdd_TTCCC" or "PR_XXXXXXX_yymmdd_TTCCCNNN") made by using location ID [XXXXXXX] such as specific ID information for each location where writing is conducted and for each apparatus, a numeral [yymmdd] specifying the date of writing, a numeral (a serial number of the machine) [TT] specifying the apparatus, a sequential number [CCC] and a sequential number [NNN] for each prescribed unit (for example, for each roll or each medium) may be used, as shown in Fig. 14, or a name ("Ryymmdd00001" or the like) made by using a numeral specifying the date of writing a sequential number may be used as a name of the image data.

Further, as a data control structure in this case, the second folder "PS_IMAGE" is provided in the layer next to the first folder "PSD" and image data are included in that folder, but, the structure has only to be one wherein the second folder is present to be lower than the first folder, and image data are included in the layer that is inside the second folder or is lower than the second folder, and other folders may be present between the first folder and the second folder, or a folder ("PR_XXXXXXX_yymmdd_TTCCCNNN" or the like) for storing therein actual data for each roll in the layer that is lower than the second folder, as shown in Fig. 14. Further, as far as the layer structure of the first folder - the second folder - image data is kept, other folders may be present to be higher than the first folder, and other folders ("SUB_PS" folder in the drawing) may be present in parallel with the second folder.

Incidentally, the folder structure shown in the drawing is a structure indicated by application (for example, explorer) so that a user can understand easily, and in the actual memory means 2, it is divided into an area where actual data are recorded and a data control area where a file name and storage place for actual data (physical address) are recorded, and the aforementioned folder is described in the data control area.

Next, in step S 107, CPU 4 uses data control structure generating means 9 to generate data of a new data control structure wherein set data of a prescribed data control structure obtained through reading from a data provider are added to data in memory means 2. To be concrete, as shown in Fig. 4, folder "SUB_PS" showing the storage place of added data on the same layer as that for the second folder "PS_IMAGE" is provided on memory means 2, and data of a new data control structure to which set data controlled by data control structure composed of "PSD" - "PS_IMAGE" - image data obtained through reading from the data provider, are generated to be lower than "SUB_PS". Incidentally, the name of the folder ("SUB_PS") showing the storage place for added data is an example, and an optional name can be used, and the position of a layer for "SUB_PS" has only to be a layer which is the same as or lower than the layer for the second folder "PS_IMAGE".

After that, in step S 108, CPU 4 uses data writing means 10 to write data based on a new data control structure generated by data control structure generating means 9, to terminate a series of operations.

Incidentally, in Fig. 4, there is illustrated an occasion wherein only set data controlled by a prescribed data control structure in the data provider (digital camera or the like) are written in to be lower than folder "SDB_PS" of data recorder (computer device 1 or the like). However, it is preferable that the data control structure representing a basis can be maintained even when a plurality of set data are added in succession. Under the foregoing, it is also possible to make an arrangement wherein folder "SUB_PS" showing the storage place for additional data is added to set data of the data provider, in the same way as in the data recorder.

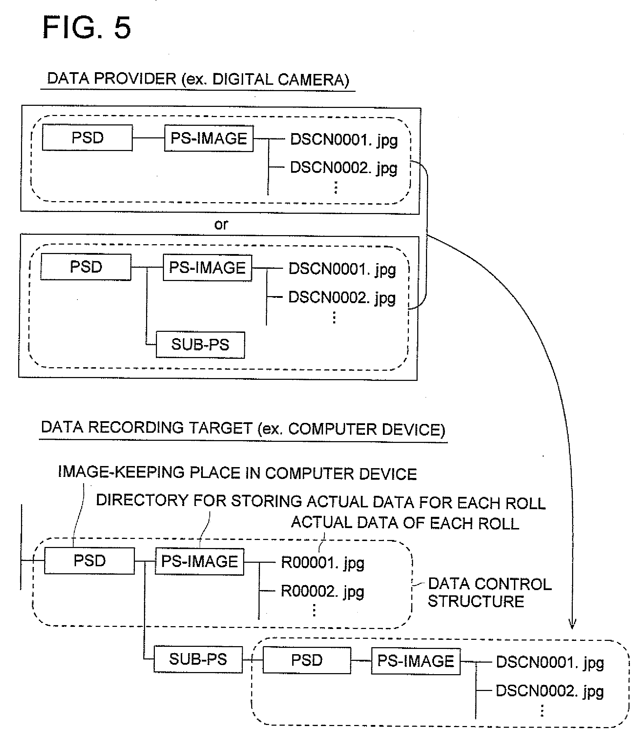

For example, as shown in Fig. 5, when folder "SUB_PS" showing a storage place for additional data to the data recorder is provided on the same layer as in the second folder "PS_IMAGE", folder "SUB_PS" showing the storage place for additional data to the same layer position as in the data recorder is provided newly in set data of the data control structure representing a basis, independently of whether "SUB_PS" is present in set data of the data provider or not. By making this arrangement, the data control structure representing a basis can be maintained even in the case of adding set data in succession.

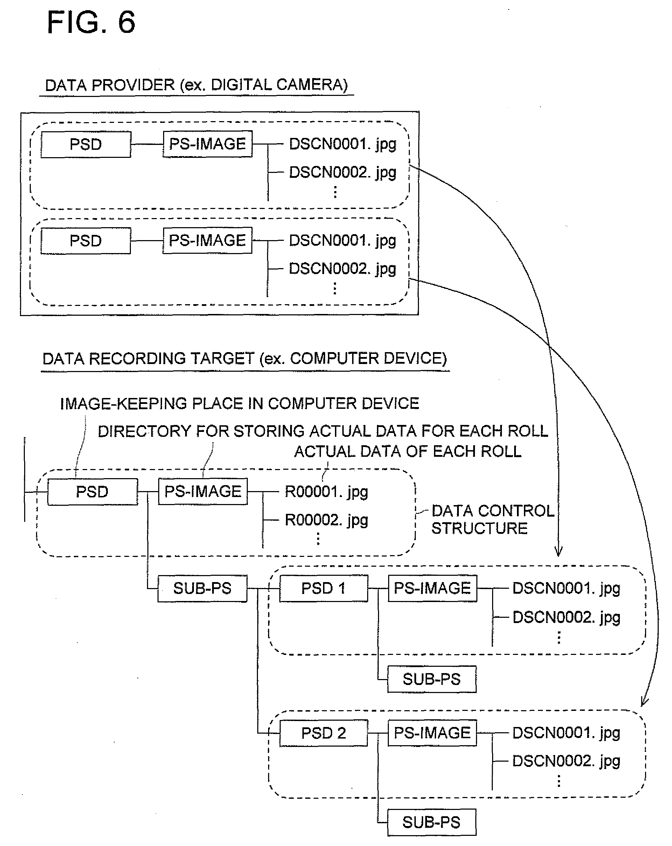

Next, how to record data when a plurality of set data of a data control structure representing a basis are present in the data provider will be explained. When adding plural set data to the data recorder, there are available two methods. The first method is one to add data to "SUB_PS" folder of the data recorder to be in parallel (namely, in the same layer). To be concrete, it is a method to write in set data to be in parallel while the data control structure is maintained on the layer that is lower than "SUB_PS" folder of the data recorder, as shown in Fig. 6, when plural (two, in this case) set data controlled by the same data control structure as in the data control structure owned by the data recorder (computer device 1 or the like) are present in the data provider (digital camera or the like). In this case, in the data recorder, "PSD" folder is changed to be "PSD1" and "PSD2" respectively for the reason of avoiding overlapping of folder names, to be in a form of sharing by two data control structures, which, however, can be considered that each has a data control structure of "PSD" - "PS_IMAGE" - image data.

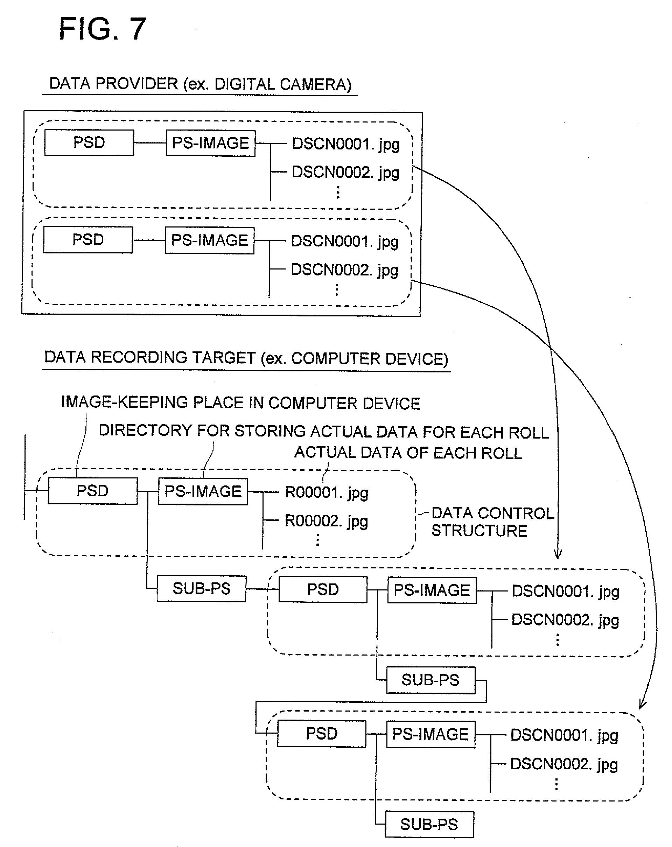

The second method is one wherein, when set data of a data provider are recorded on the data recorder and when folder "SUB_PS" showing the storage place of additional data is added to the set data, the following set data are added to be lower than that folder. In concrete terms, the second method is one wherein, when there are plural (two, in this case) set data controlled by the same data control structure as that owned by the data recorder in the data provider, as shown in Fig. 7, set data on one side are written on the layer that is lower than "SUB_PS" folder of the data recorder, then, the "SUB_PS" is added to the set data, and set data on the other side is written to be lower than the "SUB_PS" folder.

When adding plural set data, either one of the aforementioned two methods may be used. However, in the case of data (for example, data of photographs taken on different dates) wherein set data to be written in are handled in parallel, for example, the first method to add data in parallel is considered to be preferable from a point of view of data control. Further, when there is a relationship of the main and the sub in set data to be written in, the second method wherein the following set data are written on the layer that is lower than the added set data in succession is considered to be preferable from a point of view of data control. The method to be used for writing set data may either be judged automatically by the data control structure generating program or be selected by a user using an operation means of computer device 1. Incidentally, it is possible to use the former method for photographs taken in the latest date, and to record on the lower layer for photographs taken in the past, depending on the photographing time. Due to this, it is possible to indicate a history or the date of photographing for each layer, for example, and to divide into layers in the order of the latest date, thereafter.

Further, when the data provider has a plurality of set data, the data control structure of each set data does not always need to be present in the independent form. For example, as shown in Fig. 8, when folders "PS_IMAGE 1" and "PS_IMAGE 2" each showing an actual data storage directory for each roll are present to be lower than folder "PSD" showing an image storage place in a digital camera, and image data "DSCN 0001. jpg" representing actual data for each roll are stored in each of the aforesaid folder, "PSD" folder is changed to be "PSD1" and "PSD2" respectively for the reason of avoiding overlapping of folder names, in the data recorder, to be in a form of sharing by two data control structures, which, however, can be considered that each has a data control structure of "PSD" - "PS_IMAGE" - image data. In this case again, it is possible to write set data in the data recorder by either one of the aforesaid methods.

When there are data controlled by the same data control structure as that owned by memory means 2 which is to record data, in the data taken through reading from photographing equipment including a digital camera, media for digital cameras and information recording media including CD-R, as stated above, set data are written while the data control structure is maintained in the folder determined beforehand in the memory means 2, thus, plural set data can be written in the same memory means simply, and data can be controlled by the structure which can be used easily in application or a photo-service.

### (Example 2)

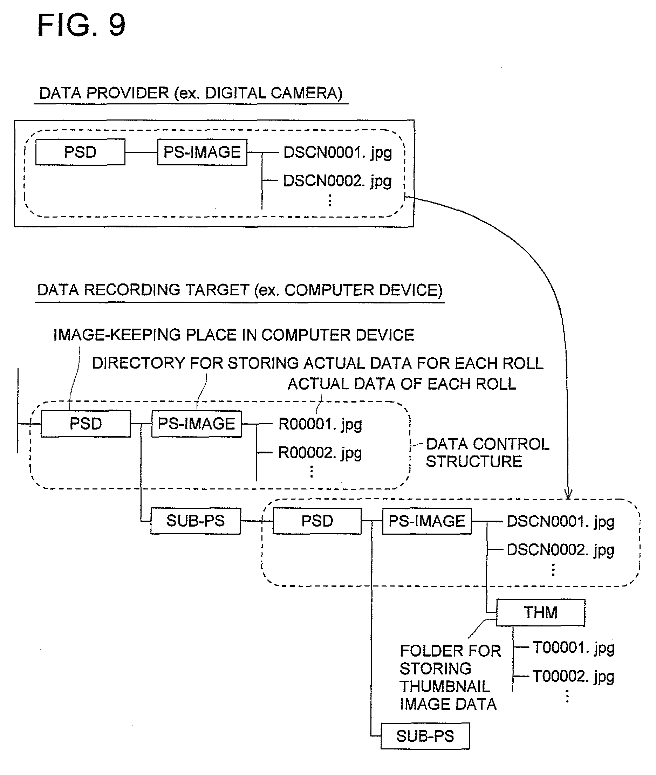

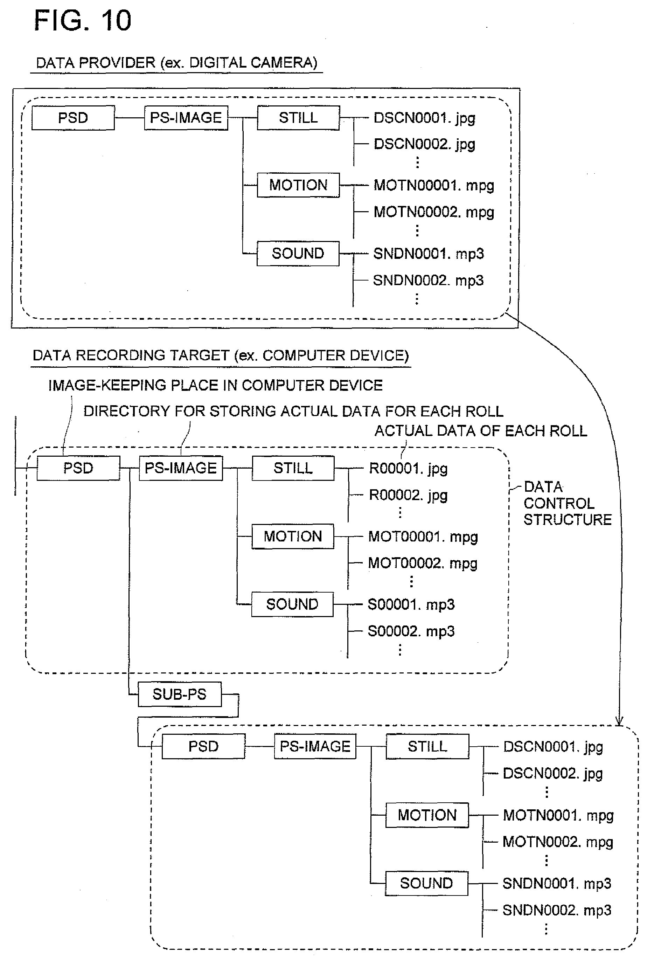

Next, the file control program relating to the Example 2 of the invention will be explained as follows, referring to Figs. 9 and 10. Each of Figs. 9 and 10 is a diagram showing an example of the structure of a folder made by the file control program of the present example. Incidentally, the present example is one showing a variation of the folder structure, and its basic structure is the same as that in the Example 1.

Although there is provided an arrangement wherein only set data recorded on photographing equipment of a file provider, media and information recording media are written newly in the Example 1, image data are displayed on an at sight basis by an application in many cases, and in that case, thumbnail image data wherein a data size of image data is reduced is used. It is therefore possible to provide an arrangement wherein an image processing means is provided on computer device 1, and when writing set data, thumbnail image data storage folder "THM" is provided to be lower than the folder "PS_IMAGE that shows actual data storage directory for each roll as shown in Fig. 9, for example, and thumbnail image data ("T00001.jpg and the like) are recorded on the aforesaid folder.

Incidentally, it is possible to establish the name of a thumbnail image data storage folder freely, and it is possible either to provide an arrangement to record original image data and thumbnail image data collectively on one folder "PS_IMAGE" without providing the thumbnail image data storage folder, or to provide an arrangement to record each set of thumbnail image data corresponding to each original image data by dividing with a folder, by making each original image data and corresponding thumbnail image data to be a set.

Although there is provided an arrangement wherein only still image data recorded on photographing equipment, media and information recording media are recorded, in the Example 1, the file of the invention includes not only still image data but also data related to images (for example, sound data used in the case of slide-displaying moving image data an images), and these data can be recorded collectively. In that case, "STILL" folder showing the still image data storage directory, "MOTION" folder showing the moving image data storage directory and "SOUND" folder showing the sound data storage directory may be provided as shown in Fig. 10, for example, to form a data control structure wherein still image data ("R00001. jpg), moving image data ("MOTN0001. mpg) and sound data ("SNDN0001. mp3) are recorded in each folder as a basic structure. Incidentally, names of these folders can be established freely, and further, an arrangement wherein these data are stored collectively to be lower than the folder "PS_IMAGE" may also be provided without dividing into each folder.

### (Example 3)

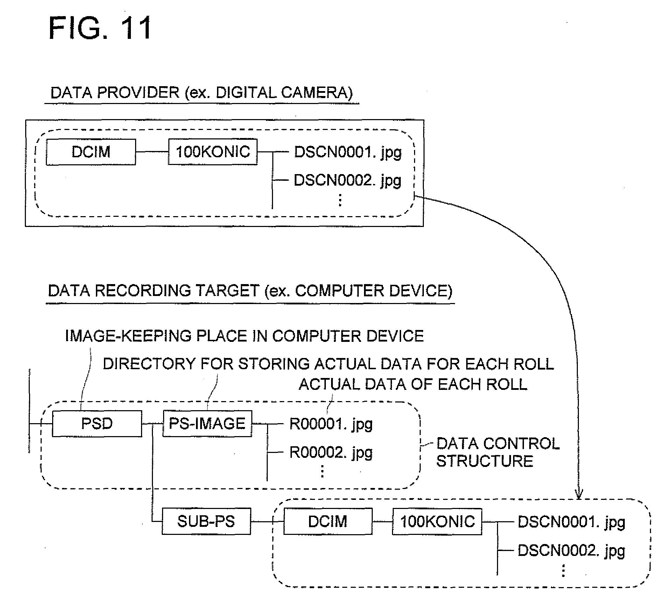

Next, the data control structure rewriting program relating to the Example 3 of the invention will be explained as follows, referring to Figs. 11 - 13. Each of Figs. 11 - 13 is a diagram showing an example of the structure of a folder made by the data control structure rewriting program of the present example.

In the Example 1 and Example 2 stated above, there has been shown an occasion wherein set data of a data recorder and that of a data provider are controlled by the folders each having the same layer structure, and data are written when names of both folders are the same. However, when writing data recorded in various types of photographing equipment, media and in information recording media, there is a fear that an occasion where data writing is impossible may take place, if not only layer structures but also folder names are required to be the same respectively. Therefore, in the present example, whether data writing is possible or not is judged only by the layer structure (the number of folders, positional relationship of layers and others) of the data control structure, independently of the name of the folder.

To be concrete, for example, in the data recorder (computer device 1 and others), folder "PS_IMAGE" showing actual data storage directory of each roll is provided to be lower than folder "PSD" showing the image storage place in the computer device 1, and image data "R00001. jpg" representing actual data for each roll are stored in the folder "PS_IMAGE", as shown in Fig. 11. On the other hand, in the data provider (digital camera and others), folder "100KONIC" showing actual data storage directory of each roll is provided to be lower than folder "DCIM" showing the image storage place in the digital camera, and image data "DSCN0001. jpg" representing actual data for each roll are stored in the folder "100KONIC".

When the aforementioned two are compared, both of them are the same on the point of a structure wherein a folder storing image data is provided to be higher than the image data, and another folder is further present right above the aforesaid folder, though names of the folders are different each other, and image data can be considered to be controlled under the same data control structure. Therefore, even in the case of this kind, data control structure generating means 9 generates data of a new data control structure wherein set data of "DCIM" - "100KONIC" - image data are added as they are, to be lower than "SUB_PS" folder of memory means 2, while, data writing means 10 conducts writing of set data based on a newly-generated data control structure.

When judging the identity of a data control structure by the layer structure alone, independently of the folder name, it is also possible to generate newly the folder name of set data to be added and the name of image data and to write them in. For example, in the case of a digital camera, names of folders and names of image data vary depending on a maker, and when writing set data of a plurality of digital cameras in memory means 2, names of folders and of image data cannot be unified, and it is difficult for a user to understand the types of recorded image data and locations for them even the user observes the data control structure. Further, since the file names of image data are established in succession under a unit of folder as in "***0001. jpg, ***0002. jpg", a plurality of image data each having the same name are sometimes written in, and types of data cannot be judged by the file name of image data alone, when writing in set data of the same digital camera repeatedly.

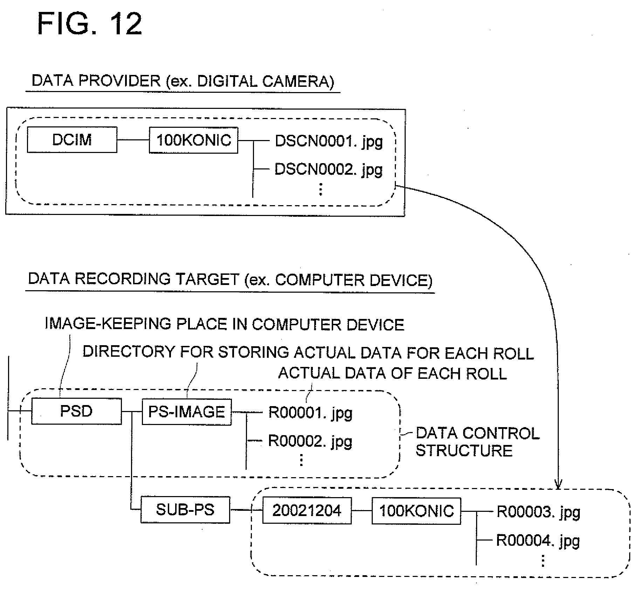

For the foregoing, it is possible to give to the folder controlled by data control structure the name by which the contents of image data can be distinguished, and to rename the file name of image data so that the file name may not be reduplicated in memory means 2. For example, as shown in Fig. 12, it is also possible to arrange so that contents of stored image data can be distinguished from the name of a folder, by changing the name of the first folder of a data provider from "DCIM" to "20021204" by using the date and hour (December 4, 2002, in this case) for photographing of image data.

Further, by considering image data ("R00001. jpg" and "R00002. jpg" in this case) recorded on memory means 2 in advance, the file name of image data can be renamed as the number following the foregoing number (R00003. jpg - in this case). By doing this renaming, an amount of image data can be grasped, and control of image data can be made easy.

In addition, since the image data are generated by a camera maker in its own form, in the case of a digital camera, when writing data of plural digital cameras, data of various forms (for example, DCF (Design rule for Camera File system) form, DPOF (Digital Print Order Format) form, EXIF form and Picture CD form) are intermingled, and it is sometimes inconvenient to use image data in an application or a photo-service. For the foregoing, it is possible to write image data taken through reading by data reading means 7 with data writing means 10, after conducting processing, or converting the form of data into a general form (for example, jpg or the like) or after conducting prescribed image processing (color correction, size conversion and others). By conducting the processing of this kind, a user can write data without being nervous about a type of the digital camera used by the user.

Incidentally, when changing the name of the aforementioned folder, a user may create the folder name in person, but it is complicated for the user to create the folder name each time the user writes data. It is therefore preferable to employ the structure wherein the folder name is created automatically based on information recorded in or attached to the image data. With respect to automatic creation of the folder name, a method to use a file control program described in the prior application (TOKUGAN No. 2002-363534) is preferable.

The file control program relating to the prior application mentioned above is one to make a computer to function as a folder name creating means that creates the name of the folder that controls a file from the defined information that was read from files in specific forms such as DCF (Design rule for Camera File system) form, DPOF (Digital Print Order Format) form, EXIF (Exchangeable image File Format for Digital Still Cameras) form and Picture CD form (Eastman Kodak Company) in accordance with a defined information reading means that reads defined information expressing information relating to image data and a predetermined rule (for example, extracting information that is common to plural files from defined information).

In the defined information reading means of the file control program, image data ("DSCN0001. jpg" or the like) in "100KONIC" folder of a data provider shown in Fig. 12, for example, are analyzed, and defined information recorded previously in or attached to respective image data are read. The defined information is one determined in advance in accordance with a form of the file, and its concrete example to be used includes a date of making a file, date and hour information such as date of updating files, file names, image title names, maker names of image input equipment, model names of image input equipment, unique ID given to each image, information about positions, service ID, product ID, envelope numbers or acceptance numbers, store numbers, frame numbers, sort numbers, roll numbers and information about orders for media and others.

In the folder name generating means, a name of the folder that stores therein image data is generated in accordance with a rule (for example, the priority order of defined information is determined, and the defined information having the highest priority order is made to be the folder name, or the common defined information among plural image data is extracted to be the folder name, or the information where plural pieces of defined information are combined is made to be the folder name) determined beforehand, referring to defined information obtained through reading.

By using the file control program described in the prior application, a name of the folder that stores the file by using defined information recorded in or attached to the image data is generated automatically, as stated above, and thereby, a user can save time for giving a name to the folder each time the user records a file, thus, the user can put files in order simply.

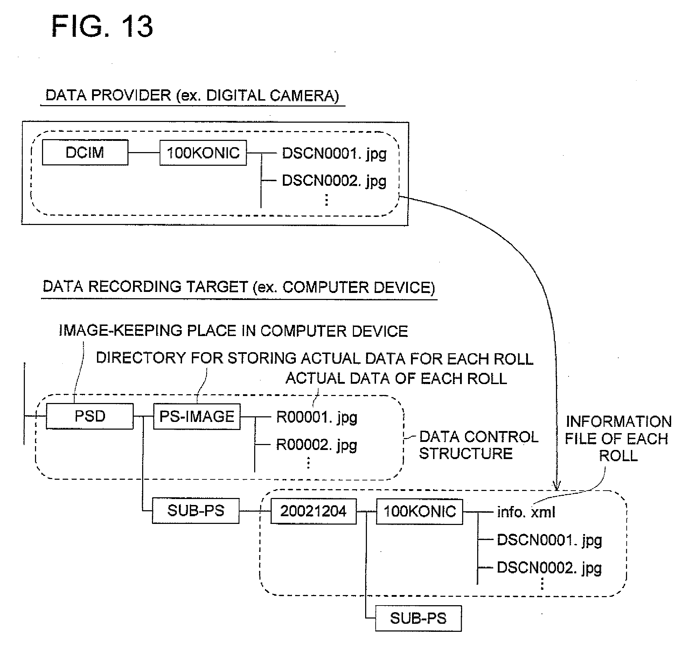

Incidentally, defined information obtained through reading by the file control program described in the prior application is useful as information for describing characteristics of the file. Thus, it is possible to make information file based on defined information thus read and to store it in the folder together with the file of image data. For example, it is also possible to employ the structure wherein defined information taken through reading by a defined information reading means is formed to be in a standardized form as in info. xml, and this information file is added to folder "'100KONIC" that stores image data as shown in Fig. 13.

When there are data controlled by the folder having the same layer structure as in data control structure owned by memory means 2 which is to record data, in data taken through reading from photographing equipment including a digital camera, media for digital cameras and information recording media including CD-R, data can be written in memory means 2 even when the folder name is different, therefore, data of various types of photographing equipment, media and of information recording media can be written in, and convenience for users can be improved.

Incidentally, in each example stated above, there is described an occasion wherein the data control structure rewriting program of the invention is applied to image data having characteristics that data recorded through various forms and folder structures are dispersed to a wide variety of photographing equipment and media to be stored therein. However, the invention is not limited to the aforementioned example, but it can be applied equally to those wherein data are made successively and they need to be controlled collectively, and for example, sound data stored in a wide variety of music playback equipment and information recording media can also be controlled collectively by the use of the data control structure rewriting program of the invention.

As explained above, the data control structure rewriting program of the invention makes it possible to write in set data of a specific data control structure which are recorded in photographic equipment such as a digital camera and a camera-fitted cellphone or in information recording media such as media for digital cameras and CD-R in other memory means simply while keeping the data control structure.

The reason for the foregoing is as follows. By using the data control structure rewriting program that makes the computer to function as a means to generate data of a new data control structure to which the set data are added while the data control structure is kept at the layer that is lower than the second folder of the memory means, when data controlled by data control structure having the first folder with a prescribed name and the second folder with a prescribed name that is positioned to be lower than the first folder are present in the memory means of the target for data recording, and when data controlled by the same data control structure are present in a photographing equipment of a data providing source, media or in information recording media, a user can write data in without being conscious of a data control structure.

In particular, even when arranging a large amount of image data of photographs taken by various photographing equipment previously, data can be recorded automatically under an appropriate data control structure, and therefore, it is possible to control files in a structure that can be used easily, and utilization of a photo-service employing image data can be promoted.

## Claims

1. A data control structure rewriting program to control a computer to function as a data control structure rewriting device for storing a plurality of data sets in a hierarchical structure in a recording section, where each data set includes a folder and image data, the data control structure rewriting device comprising:
a reading section to read a data set recorded in a recording medium as an additional data set to be added in the recording section;
a data control structure analyzing section to analyze the data control structure of the additional data set read by the reading section and to compare the analyzed data control structure of the additional data set with the data control structure of a data set stored in a hierarchical position in the hierarchical structure at where the additional data set is linked; and
a data control structure generating section to rewrite the hierarchical structure, wherein when the comparison result of the data control structure analyzing section satisfies a predetermined condition, the data control structure generating section adds the additional data set in the recording section by linking the additional data at the hierarchical position in the hierarchical structure.

2. The data control structure rewriting program of claim 1, wherein in the case that the data control structure of the stored data set includes a first folder and a second folder located lower than the first folder in the hierarchical structure, when the comparison results indicates that the data control structure of the additional data set also includes the first folder and the second folder, the data control structure generating section judges that the comparison result satisfies the predetermined condition and the data control structure generating section adds the additional data set in the recording section.

3. The data control structure rewriting program of claim 1, wherein the data control structure generating section links the additional data set at the hierarchical position lower than the stored data set in the hierarchical structure.

4. The data control structure rewriting program of claim 3, wherein the data control structure generating section adds an additional folder indicating an adding position at the same position of the second folder of the stored data set and links the additional data set at a position lower than the additional folder.

5. The data control structure rewriting program of claim 1, wherein in the case that the data control structure of the stored data set includes a first folder of a first name and a second folder of a second name located lower than the first folder in the hierarchical structure, when the comparison results indicates that the data control structure of the additional data set also includes the first folder of the first name and the second folder of the second name, the data control structure generating section judges that the comparison results the predetermined condition and the data control structure generating section adds the additional data set in the recording section.

6. The data control structure rewriting program of claim 1, wherein when the reading section reads a data set recorded in the recording medium as the additional data, the reading section renames the name of a folder of the additional data set.

7. The data control structure rewriting program of claim 2, wherein the first folder indicates a storing position of the image data and the second folder indicates a data storing directory.
